# EUROPÄISCHE PATENTANMELDUNG

(11) **EP 0 541 115 A1**
(43) Veröffentlichungstag der Anmeldung: **12.05.1993**
(21) Anmeldenummer: 92119058.3
(22) Anmeldetag: 06.11.1992
(51) Int. Cl.: B60R 9/06

(54) **Heckgepäckträger mit Fahrradhalter für Kleinbusse u.dgl.**

(30) Priorität: 07.11.1991 DE 4136713
(71) Anmelder: CAMPING GAZ INTERNATIONAL (DEUTSCHLAND) GMBH, D-65795 Hattersheim (DE)
(72) Erfinder: Baumgartner, Heinz, D-7505 Ettlingen (DE)
(74) Vertreter: Kern, Wolfgang, Dipl.-Ing.

(57) **Zusammenfassung**

Die Erfindung betrifft einen Heckgepäckträger mit Fahrradhalter für Kleinbusse, Wohnmobile u.dgl., mit einem im wesentlichen parallel zur Oberfläche einer in der Fahrzeugheckwand befindlichen Heckklappe oder -tür angeordneten Grundrahmen aus Längsholmen und Querholmen und einem an diesem von der Heckwand wegschwenkbar angebrachten und mit einem Halter für Fahrräder versehenen Schwenkrahmen.

Derartige Heckgepäckträger haben den Nachteil, daß nicht nur ihr Eigengewicht, sondern auch das gesamte Gewicht der von ihnen zu tragenden Fahrräder an der Heckklappe bzw. Hecktür aufgehängt ist.

Dieser Nachteil wird dadurch beseitigt, daß die unteren Enden (12) der Längsholme (7) des Grundrahmens (4) auf dem Stoßfänger (13) des Fahrzeuges aufsitzen und mittels in bzw. an den Längsholmen (7) angeordneten Federn (14) das Gewicht des Schwenkrahmens (11) einschließlich des Fahrradhalters (10) sowie des Grundrahmens (4) auf den Stoßfänger (13) übertragen, und daß die Längsholme (7) an parallel zu ihnen angeordneten Längsstäben (6) längsverschiebbar geführt sind, welche an ihren oberen und unteren Enden (15, 16) mit der Fahrzeugheckwand (2) bzw. Heckklappe (3) oder -tür lösbar verbunden sind.

## Beschreibung

Die Erfindung betrifft einen Heckgepäckträger mit Fahrradhalter für Kleinbusse, Wohnmobile u.dgl., gemäß dem Oberbegriff des Anspruchs 1.

Derartige Heckgepäckträger (DE 32 35 348) haben den Nachteil, daß nicht nur ihr Eigengewicht sondern auch das gesamte Gewicht der von ihnen getragenen Fahrräder an der Heckklappe bzw. Hecktür des Fahrzeugs aufgehängt ist, da sich die Tür zusammen mit dem Träger öffnen und schließen lassen soll, weil der heckseitige Zugang zum Innenraum des Fahrzeugs durch den Gepäckträger nicht verstellt werden soll. Dieser muß also notgedrungen zusammen mit der Klappe oder Tür verschwenkt werden können.

Das Gewicht der üblichen mit einem Fahrradhalter versehenen Heckgepäckträger beträgt etwa 5 bis 7 kg, während die Belastung eines mit drei und mehr Fahrrädern bestückten Fahrradhalters mit bis zu 50 kg anzusetzen ist. Dieses relativ hohe Gewicht stellt nicht nur an die Stabilität der Heckklappe bzw. Hecktür erhebliche Anforderungen, sondern insbesondere an deren Haltungen im Dach- bzw. Seitenwandbereich des Fahrzeugs. Bei hohen Beschleunigungen und Verzögerungen des Fahrzeugs, wie sie insbesondere bei Auffahrunfällen auftreten, übersteigen die an den Heckklappen- bzw. Hecktüraufhängungen wirkenden Kräfte die durch die genannten Gewichte eingeleiteten Kräfte um ein Vielfaches.

Die Aufgabe der Erfindung besteht deshalb darin, den Heckgepäckträger der genannten Art so weiterzubilden, daß die Heckklappe oder Hecktür der genannten Fahrzeuge von den statischen und dynamischen Belastungen, hervorgerufen durch das Eigengewicht des Gepäckträgers und die von ihm getragenen Fahrräder, erheblich entlastet wird.

Diese Aufgabe wird erfindungsgemäß dadurch gelöst, daß die unteren Enden der Längsholme des Grundrahmens auf dem Stoßfänger des Fahrzeugs aufsitzen und mittels in bzw. an den Längsholmen angeordneter Federn das Gewicht des Schwenkrahmens einschließlich des Fahrradhalters sowie des Grundrahmens auf den Stoßfänger übertragen, und daß die Längsholme an parallel zu ihnen angeordneten Längsstäben längsverschieblich geführt sind, welche an ihren oberen und unteren Enden mit der Fahrzeugheckwand bzw. Heckklappe oder -tür lösbar verbunden sind.

Auf diese Weise wird die durch den Heckgepäckträger verursachte Belastung des Fahrzeughecks nicht mehr, jedenfalls nicht mehr ausschließlich, von der Heckklappe oder Hecktür aufgenommen, sondern von dem mit der Karosserie verbundenen, stabilen Stoßfänger. Die Heckklappe oder Hecktür muß lediglich das Gewicht einer Art Hilfskonstruktion tragen, die dazu bestimmt ist, die Längsholme des Grundrahmens, deren untere Enden auf dem Stoßfänger aufsitzen, längsbeweglich zu führen. Die federnde Lagerung der Längsholme ermöglicht es, den Grundrahmen und damit den an ihm angebrachten Schwenkrahmen zusammen mit dem Fahrradhalter außer Berührungseingriff mit der Oberfläche des Stoßfängers zu bringen, die Heckklappe oder Hecktür also über den Stoßfänger hinwegzuschwenken, da die Längsholme auf Grund ihrer Federung sich um den Federweg verkürzen lassen und damit selbst unter Belastung außer Berührung mit dem Stoßfänger gebracht werden können.

Gemäß einer vorteilhaften Ausgestaltung der Erfindung weist der Grundrahmen in an sich bekannter Weise zwei Längsholme auf,die mit je einem Längsstab über wenigstens ein von dem Längsholmen und dem Längsstab durchsetztes Verbindungselement in bezug auf einander längsbeweglich verbunden sind und die mit Hilfe eines oberen Querholmens und eines unteren Querholmens zur Bildung des Grundrahmens miteinander verbunden sind. Auf diese Weise erhält der Grundrahmen nicht nur die erforderliche Stabilität, um die gesamte Heckgepäckträgerlast auf den Stoßfänger möglichst verteilt übertragen zu können, sondern wird auch beidseitig so geführt, daß er an der Heckklappe oder der Hecktür bei ausreichender Längsbeweglichkeit, d.h. Beweglichkeit in Richtung der Fahrzeughöhe, festgehalten wird, sich also nicht losreißen kann.

Die die Längsbeweglichkeit der Längsholme bewirkenden Federn können vorteilhafterweise in den Längsholmen selbst angeordnet werden, und zwar in deren unteren rohrförmigen Enden, die sich mit Hilfe von Gleitkörpern auf dem Stoßfänger abstützen, wobei die Federn zudem unter Vorspannung stehen können, so daß sie zumindest einen Teildes durch die Fahrräder verursachten Gewichtes kompensieren und dadurch einen kürzeren Federweg ermöglichen.

Es hat sich in diesem Zusammenhang auch als vorteilhaft erwiesen, die Gleitkörper auf einer auf dem Stoßfänger befestigten bzw. an ihm ausgebildeten Lagerplatte aufsitzen zu lassen, die eine Raststelle aufweist, in die der Gleitkörper beim Schließen der Heckklappe oder Hecktür federnd einrastet, jedoch das Öffnen der Heckklappe oder -tür nicht behindert.

Als Federn für den oben genannten Zweck haben sich Schraubenfedern, aber auch Gasfedern mit einem Federweg von bis zu etwa 10 mm als besonders geeignet erwiesen, während als Gleitkörper zweckmäßigerweise Kugeln Verwendung finden.

Im Hinblick auf die vorteilhafte Ausbildung der oberen und unteren Enden der parallel zu den Längsholmen verlaufenden Längsstäbe hat es sich besonders bewährt, diese Stabenden mit die obere Randkante bzw. untere Randkante der Heckklappe oder Hecktür umgreifenden Schnappelementen zu versehen, durch die die Längsstäbe und damit die an ihnen mit Hilfe der Verbindungselemente längsverschiebbar gelagerten Längsholme an der Heckklappe festspannbar sind, wobei dieses Festspannen insbesondere mit Exzentern erfolgen kann, die auf die Längsstäbe eine Spannung ausüben, welche Belastungen bis zu 20g, also dem Zwanzigfachen der Erdbeschleunigung, aushält, ohne daß sich die Längsstäbe aus ihren Verankerungen an der Klappe bzw. Tür lösen.

Die Erfindung wird nachfolgend anhand des in der Zeichnung dargestellten Ausführungsbeispiels näher erläutert. In der Zeichnung zeigen:
- Fig. 1: eine schematische Draufsicht auf ein mit dem Heckgepäckträger ausgerüstetes Fahrzeugheck, wobei aus Vereinfachungsgründen nur die linke Hälfte des Fahrzeughecks und des Gepäckträgers dargestellt sind, und
- Fig. 2: eine vergrößerte Ansicht der in Fig. 1 mit X bezeichneten Einzelheit im Maßstab 1:1, die insbesondere die Anordnung der Feder innerhalb des Längsholmens schematisch zeigt, und zwar in einer teilweise geschnittenen Seitenansicht in Richtung des Pfeils A in Fig. 1.

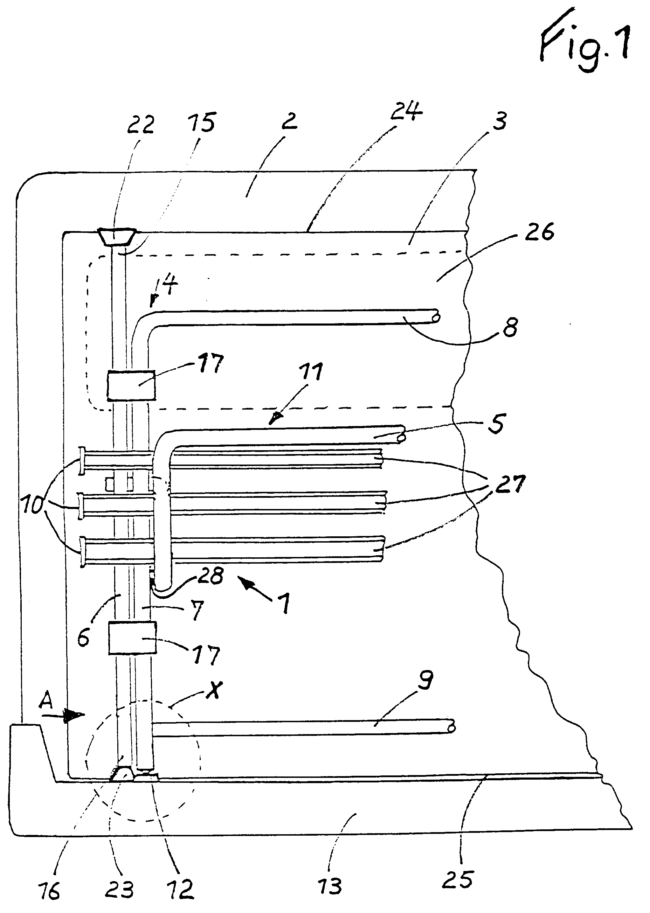

Die in Fig. 1 gezeigte Fahrzeugheckwand 2 eines Kleinbusses ist mit einer Heckklappe 3 versehen, die an nicht dargestellten Scharnieren im Bereich des Fahrzeugdaches aufgehängt ist und in der sich eine Heckscheibe 26 befindet. An der Heckklappe 3 ist ein mit 1 bezeichneter Heckgepäckträger befestigt, der aus einem Grundrahmen 4, einem an diesem verschwenkbar angebrachten Schwenkrahmen 11 und zwei seitlich des Grundrahmens und parallel zu dessen beiden Längsholmen 7 angeordneten Längsstäben 6 besteht. Die Längsholme 7 sind durch einen oberen Querholmen 8 und einen unteren Querholmen 9 zur Bildung des Grundrahmens 4 miteinander fest verbunden. Auf dem Schwenkrahmen 11 ist ein aus drei parallelen Schienen 27 bestehender Fahrradhalter 10 befestigt, der somit zur Aufnahme von drei Fahrrädern dienen kann. Der Schwenkrahmen 11, der in Fig. 1 in an die Fahrzeugheckwand 2 angeklappter Stellung gezeigt ist, läßt sich um etwa 90° in eine etwa waagrechte Fahrradaufnahmestellung wegklappen, in der er durch an sich bekannte Arretierungsmittel festgehalten wird. Er besteht wie auch der Grundrahmen aus Hohlprofilen 5, insbesondere Rohren und ist an den Längsholmen 7, wie bei 28 schematisch gezeigt, verschwenkbar gelagert.

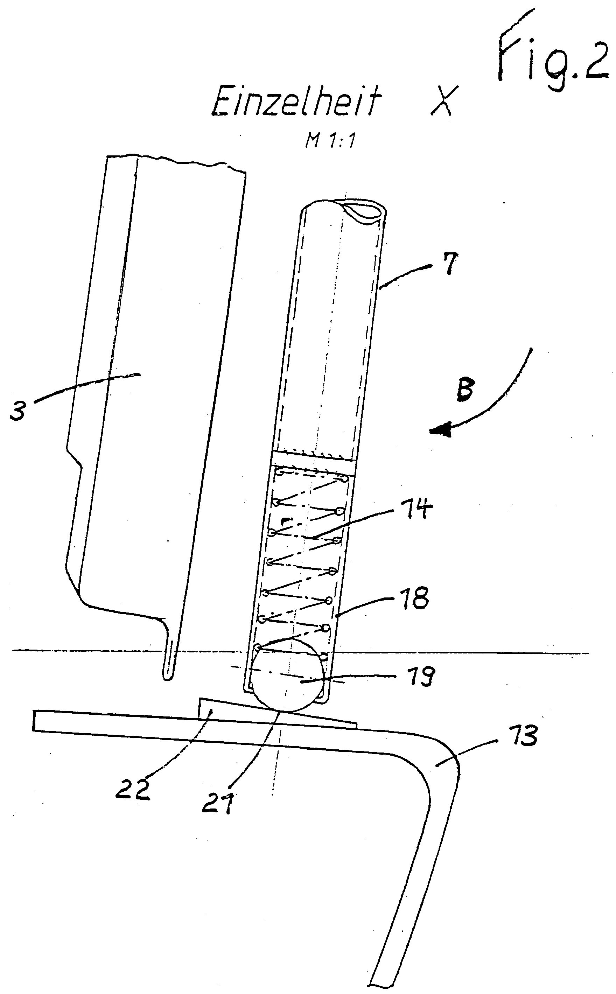

Die unteren Enden 12 der Längsholme 7 des Grundrahmens 4 sitzen auf dem Stoßfänger 13 des Fahrzeugs auf und übertragen mittels in bzw. an den Längsholmen 7 angeordneter Federn 14 das Gewicht des Schwenkrahmens 11 einschließlich des Fahrradhalters 10 und der auf diesem befindlichen Fahrräder sowie des Grundrahmens auf den Stoßfänger 13. Die Federn 14, von denen der die in Fig.2 dargestellten Einzelheit X nur eine zu sehen ist, da sich die andere in dem zweiten, also rechten Längsholmen 7 des Grundrahmens befindet, sitzen in den unteren rohrförmigen Enden 18 der Längsholme und können Schraubenfedern sein, wie dargestellt, jedoch auch Gasdruckfedern oder andere geeignete Federelemente, deren Federweg bis zu 10 mm betragen kann. Das untere Ende jeder Feder 14 sitzt auf einem Gleitkörper 19 in Form einer Kugel, die aus dem rohrförmigen Ende 18 des Längsholmens 7 etwas herausragt und auf einer auf dem Stoßfänger 13 befestigten bzw. an ihm ausgebildeten Lagerplatte 20 aufsitzt, die eine Raststelle 21 aufweist,in die die Kugel beim Schließen der Heckklappe 3, das in Richtung des Pfeils B erfolgt, federnd einrastet.

Die Längsholme 7 sind an den parallel zu ihnen angeordneten Längsstäben 6 mit Hilfe zweier Verbindungselemente 17, die sowohl von den Längsholmen als auch von den Längsstäben durchsetzt werden, in bezug aufeinander längsbeweglich angeordnet,wobei die Verbindungselemente 17,die die Form von Lagerbuchsen mit zwei parallelen Durchgängen aufweisen können, an den Längsstäben 16 starr befestigt sind, während sie eine Gleitbewegung der Längsholme 7 ermöglichen.Diese Verbindungselemente übertragen somit das Gewicht des Grundrahmens einschließlich des Schwenkrahmens mit dem Fahrradhalter nicht auf die Längsstäbe 6. Dieses Gewicht wird über die Gleitkörper 19 direkt auf den Stoßfänger 13 übertragen, der mit der Karosserie des Fahrzeugs fest verbunden ist. Um jedoch eine Verschwenkung der Heckklappe trotz des auf den Stoßfänger einwirkenden Gewichts des Heckgepäckträgers zu ermöglichen, ist, wie oben ausgeführt, der Gleitkörper federnd gelagert, kann also selbst bei einer vorgespannten Feder zum Öffnen und Schließen der Heckklappe in den Längsholmen 7 hineingepreßt werden, um seine Raststelle 21 zu verlassen bzw. zu erreichen.

Die Längsstäbe 6 dienen dazu, den Heckgepäckträger mit der Heckklappe 3 zu verspannen, ohne daß auf die Heckklappe das Gewicht des Gepäckträgers einwirkt. Zu diesem Zweck umgreifen die oberen und unteren Enden 15, 16 der Längsstäbe 6 die obere Randkante 24 bzw. untere Randkante 25 der Heckklappe 3 mit Hilfe von Schnappelementen 22, 23, die mittels nicht näher dargestellter Exzenterelemente ein Verspannen der Längsstäbe mit der Heckklappe ermöglichen, so daß diese auch unter extremen Beschleunigungs- und Verzögerungsbelastungen, wie sie beispielsweis bei Auffahrunfällen auftreten, sich nicht von der Heckklappe lösen und damit den Gepäckträger einschließlich seiner Fracht in seiner Einbaulage halten. Die Schnappelemente und ihre Exzenter sind zu diesem Zweck so beschaffen, daß sie die Längsstäbe auch noch bei Beschleunigungen bis zu 20 g, also dem Zwanzigfachen der Erdbeschleunigung, an der Heckklappe festhalten.

## Patentansprüche

1. Heckgepäckträger mit Fahrradhalter für Kleinbusse, Wohnmobile u. dgl., mit einem im wesentlichen parallel zur Oberfläche einer in der Fahrzeugheckwand (2) befindlichen Heckklappe (3) oder -tür angeordneten Grundrahmen (4) aus Längsholmen (7) und Querholmen (8, 9) und einem an diesem von der Heckwand (2) wegschwenkbar angebrachten und mit einem Halter (10) für Fahrräder versehenen Schwenkrahmen (11), dadurch **gekennzeichnet,** daß die unteren Enden (12) der Längsholme (7) des Grundrahmens (4) auf dem Stoßfänger (13) des Fahrzeugs aufsitzen und mittels in bzw. an den Längsholmen (7) angeordneter Federn (14) das Gewicht des Schwenkrahmens (11) einschließlich des Fahrradhalters (10) sowie des Grundrahmens (4) auf den Stoßfänger (13) übertragen, und daß die Längsholme (7) an parallel zu ihnen angeordneten Längsstäben (6) längsverschiebbar geführt sind, welche an ihren oberen und unteren Enden (15, 16) mit der Fahrzeugheckwand (2) bzw. Heckklappe (3) oder -tür lösbar verbunden sind.

2. Heckgepäckträger nach Anspruch 1, dadurch **gekennzeichnet**, daß der Grundrahmen (4) in an sich bekannter Weise zwei Längsholme (7) aufweist, die mit je einem Längsstab (6) über wenigstens ein von dem Längsholmen und dem Längsstab durchsetztes Verbindungselement (17) in bezug aufeinander längsbeweglich verbunden sind und die mit Hilfe eines oberen Querholmens (8) und eines unteren Querholmens (9) zur Bildung des Grundrahmens (4) miteinander verbunden sind.

3. Heckgepäckträger nach Anspruch 1 oder 2, dadurch **gekennzeichnet,** daß die Federn (14) in bzw. an den Längsholmen (7) in den unteren rohrförmigen Enden (18) der Längsholme sitzen und die Längsholme mit Hilfe von unter der Spannung der Federn (14) stehenden Gleitkörpern (19) auf dem Stoßfänger (13) abstützen.

4. Heckgepäckträger nach Anspruch 3, dadurch **gekennzeichnet**, daß die Gleitkörper (19) auf einer auf dem Stoßfänger (13) befestigten bzw. an ihm ausgebildeten Lagerplatte (20) aufsitzen, die eine Raststelle (21) aufweist, in die der Gleitkörper (19) beim Schließen der Hecklappe (3) oder -tür federnd einrastet.

5. Heckgepäckträger nach einem der Ansprüche 1 - 4, dadurch **gekennzeichnet**, daß die Federn (14) Schraubenfedern sind.

6. Heckgepäckträger nach einem der Ansprüche 1 - 4, dadurch **gekennzeichnet,** daß die Federn (14) Gasdruckfedern sind.

7. Heckgepäckträger nach einem der Ansprüche 1 - 6, dadurch **gekennzeichnet,** daß die Federn (14) einen Federweg von bis zu 10 mm aufweisen.

8. Heckgepäckträger nach einem der Ansprüche 1 - 7, dadurch **gekennzeichnet,** daß die Federn (14) vorgespannt sind.

9. Heckgepäckträger nach einem der Ansprüche 3 - 8, dadurch **gekennzeichnet,** daß die Gleitkörper (19) Kugeln sind.

10. Heckgepäckträger nach Anspruch 1, dadurch **gekennzeichnet,** daß die oberen und unteren Enden (15, 16) der Längsstäbe (6) mit die obere Randkante (24) bzw. untere Randkante (25) der Heckklappe (3) oder -tür umgreifenden Schnappelementen (22, 23) versehen sind, durch die die Längsstäbe und damit die an ihnen mit Hilfe der Verbindungselemente (17) längsverschiebbar gelagerten Längsholme (7) an der Hecklappe (3) oder -tür festspannbar sind.

11. Heckgepäckträger nach Anspruch 10, dadurch **gekennzeichnet,** daß Schnappelemente (22, 23) mit Exzenter versehen sind, durch die die Längsstäbe (6) so verspannbar sind, daß sie auf der Hecklappe (3) oder -tür bis zu 20 g festliegen.
